# EUROPÄISCHE PATENTSCHRIFT

(11) **EP 1 152 580 B1**
(45) Veröffentlichungstag und Bekanntmachung des Hinweises auf die Patenterteilung: **23.08.2006**
(21) Anmeldenummer: 01105592.8
(22) Anmeldetag: 06.03.2001
(51) Int. Cl.: H04L 29/06, H04L 12/56, H04L 12/46

(54) **Verfahren zum Vermitteln von Verbindungen zwischen zumindest zwei Teilbereichen eines paketorientierten Netzes**
Method for establishing connections between at least two parties within a packet communication network
Méthode pour l'établissement de connections entre au minimum deux parties d'un réseau de communication par paquets

(30) Priorität: 03.05.2000 DE 10021499
(43) Veröffentlichungstag der Anmeldung: 07.11.2001
(73) Patentinhaber: SIEMENS AKTIENGESELLSCHAFT, 80333 München (DE)
(72) Erfinder: Prehofer, Christian, Dr., 81477 München (DE)

(56) Entgegenhaltungen:
- WO-A-99/53719
- GB-A- 2 331 659
- ITU-T SG16: "ITU-T, H.323, PACKET BASED MULTIMEDIA COMMUNICATIONSSYSTEMS" ITU-T H.323, September 1999 (1999-09), Seiten 1-129, XP002166480
- BUCKLEY M, ITU-T SG16: "End to End QoS Control and Signalling in H.323 Systems" TEMPORARY DOCUMENT: DRAFT ITU-T H.323 ANNEX N, [Online] 15. Februar 2000 (2000-02-15), Seiten 1-51, XP002240488 Gefunden im Internet: <URL:www.itu.org> [gefunden am 2003-05-08]
- YAVATKAR R ET AL: "RFC 2753 A Framework for Policy-based Admission Control" IETF REQUEST FOR COMMENTS, Januar 2000 (2000-01), Seiten 1-20, XP002179102

## Beschreibung

In verbindungslosen, paketorientierten Netzen, wie zum Beispiel im Internet oder Netzen gemäß dem ITU-T Standard H.323, wird für Verbindungen zwischen Endgeräten dieser Netze keine Dienstgüte bzw. Quality of Service, garantiert. Die Dienstgüte umfasst auch die Bandbreite bzw. die Übertragungsgeschwindigkeit, die für eine Verbindung bereitgestellt wird.

Bei einer Sprachübertragung in lokalen Netzen, das heisst in paketorientierten Netzen, wird die Dienstgüte durch eine Überdimensionierung der übertragungstechnischen Ressourcen gesichert, da hohe Bandbreiten in lokalen Netzen wirtschaftlich günstig realisierbar sind. Häufig werden Teilbereiche von lokalen Netzen - beispielsweise firmeninterne Kommunikationsnetze - zu einem lokalen Netz miteinander verbunden. Da die Teilbereiche der lokalen Netze meist an geografisch unterschiedlichen Orten realisiert sind, sind für die Verbindungen zwischen diesen Teilbereichen meist Mietleitungen vorgesehen. Um bei über zwischen den Teilbereichen geführten Verbindungsstrecken eine ausreichende Dienstgüte zu sichern, dürfen nur so viele Verbindungen über diese Verbindungsstrekke zwischen den Netzen geführt werden, wie übertragungstechnische Ressourcen zur Verfügung stehen, wobei für jede Verbindung während der Verbindungsinitialisierung eine übertragungstechnische Ressource beantragt wird. In den meisten Anwendungen sind zentrale Einheiten vorgesehen, die die Verbindungen innerhalb eines Teilbereichs koordinieren und kontrollieren. Beispielsweise sind in einem paketorientierten Multimedia-Kommunikationssystem gemäß dem ITU-T Standard H.323 Gatekeeper oder Bandbreiten-Manager angeordnet, die Daten- und Sprachverbindungen - bei Anschluss ans Internet auch Voice over Internet-Verbindungen - steuern und kontrollieren. Hierbei ist es aufwendig, über die Datenwege aller initialisierten Verbindungen auch über die jeweiligen Teilbereiche hinweg die Bandbreite für jede einzelne Verbindung zu kontrollieren. Hierzu ist das Wissen über die exakten Vermittlungswege der Verbindungen innerhalb der Teilbereiche bzw. innerhalb des lokalen Netzes erforderlich. In den Gatekeepern der Multimedia-Kommunikationssysteme gemäß dem Standard H.323 ist jedoch auf Grund des sehr hohen Aufwandes eine derartige Realisierung nicht wirtschaftlich.

Das Dokument WO 99/53719 offenbart eine Anpassung vorhandener, paketvermittelnder LAN-Infrastrukturen für die Bereitstellung virtueller verbindungsorientierter Dienste auf Basis reservierter Bandbreite. Ein zentraler Kontrollpunkt der Infrastruktur verwaltet sowohl eine Übersicht der Pfade zwischen Endstationen im Netzwerk als auch die verfügbaren Bandbreiten der Verbindungen und Vermittlungsknoten entlang der Pfade. Sobald eine virtuelle Verbindung zwischen Endstationen angefordert wird, bestimmt der zentrale Kontrollpunkt, ob die geforderte Bandbreite über den gesamten Pfad verfügbar ist. Falls ja, werden die Ressourcen entlang des Pfades reserviert und die gewünschte QoS bereitgestellt.

ITU-T Dokument "H.225.0 Annex G update", TD-27, 18-22 October 1999, befasst sich unter anderem mit Interoperabilität in H.323-Systemen, und speziell mit der Addressauflösung für Rufanforderungsnachrichten für den Rufaufbau zwischen verschiedenen administrativen Domänen. Eine administrative Domäne grenzt sich von anderen administrativen Domänen mittels eines Grenzelements ab. Im Allgemeinen tauschen Grenzelemente Adressierungsinformationen aus, die jede administrative Domäne auflösen kann. Hierarchische Adressierungsschemen werden kurz genannt, aber nicht weiter im Detail ausgeführt.

Eine weitere Alternative, die Dienstgüte bei Verbindungen, die zwischen Teilbereichen eines lokalen Netzes geführt werden, zu sichern, besteht in der Überdimensionierung der Verbindungsstrecken zwischen den Teilbereichen des lokalen Netzes. Eine derartige Lösung erfordert einen hohen zusätzlich technischen und damit auch wirtschaftlichen Aufwand.

Die der Erfindung zugrundeliegende Aufgabe besteht darin, die Dienstgüte für Verbindungen zu sichern, die zwischen Teilbereichen eines paketorientierten Netzes über Verbindungsstrekken mit vorgegebenen übertragungstechnischen Ressourcen geführt werden. Die Aufgabe wird durch die Merkmale des Anspruchs 1 gelöst.

Vorzugsweise ist die Teilbereichinformation durch eine Benutzergruppeninformation repräsentiert, wobei diese durch eine zusätzliche Adressinformation bzw. Wählinformation oder eine durch eine Zuordnung von Gruppen von Adressinformationen des Netzes zu den Teilbereichen oder eine durch eine Zuordnung von Gruppen von Schicht-2-Information zu den Teilnetzen oder durch eine Zuordnung von Teilen einer Adressinformation oder Wählinformation zu den Teilbereichen oder organisatorische Informationen der Teilbereiche angezeigt wird - Anspruch 3.

Ein wesentlicher Vorteil des erfindungsgemäßen Verfahrens ist darin zu sehen, dass zentral in den Teilbereichen die Verbindungen, die zwischen den Teilnetzen zu übermitteln sind, auf Grund der einen Teilbereich identifizierenden Adressinformation erkannt werden, und auf Grund des Wissens über die vorgegebenen übertragungstechnischen Ressourcen zwischen dem Ursprungs- und dem Ziel-Teilbereich die Verbindungen über diese Verbindungsstrecke mit der vorgegebenen übertragungstechnischen Ressource gesteuert bzw. zugelassen werden kann. Dies bedeutet, dass nicht mehr Verbindungen mit einer angeforderten übertragungstechnischen Ressource bzw. einer Übertragsgeschwindigkeit über die zumindest eine Verbindungsstrecke zwischen den Teilbereichen übermittelt wird, als übertragungstechnische Ressourcen zur Verfügung stehen. Hierdurch wird die Dienstgüte erheblich gesteigert, wobei auf Grund der zusätzlichen oder zugeordneten Adressinformation oder Organisationsinformation, die jeweils eine Benutzergruppe bzw. einen Teilbereich definieren, und der angeforderten übertragungstechnischen Ressourcen eine Überprüfung der verfügbaren übertragungstechnischen Ressourcen zwischen den Teilbereichen eine Aussage über die Zulassung einer initialisierten Verbindung möglich ist.

Nach einer Ausgestaltungsvariante des erfindungsgemäßen Verfahrens können die Teilbereiche des Netzes in weitere Unterbereiche unterteilt werden, wobei den weiteren Unterbereichen jeweils ein Teil der übertragungstechnischen Ressourcen der zumindest einen Übertragungsstrecke zugeordnet ist - Anspruch 4. Vorteilhaft sind die Unterbereiche durch Benutzergruppen mit unterschiedlichen Diensten oder Dienstklassen repräsentiert - Anspruch 5. Hierdurch kann für unterschiedliche Dienste die Dienstgüte bzw. können die vorgegebenen übertragungstechnischen Ressourcen je Dienst unterschiedlich bestimmt werden.

Nach einer weiteren vorteilhaften Ausgestaltung des erfindungsgemäßen Verfahrens wird die Sicherung der Dienstgüte der Verbindungen in zumindest einem der paketorientierten Teilnetze für zumindest ein weiteres Teilnetz durchgeführt - Anspruch 2. Dies bedeutet, dass nicht jeder Gatekeeper - bei H.323-Netzen - oder eine die Verbindungen in dem jeweiligen Teilbereich steuernden Einheit eine Steuerung gemäß dem erfindungsgemäßen Verfahren aufweisen muss. Hierdurch wird der wirtschaftliche Aufwand weiter reduziert.

Vorteilhaft sind bei einem Netz gemäß dem Standard ITU-T H.323 die Teilbereiche durch lokale Zonen gebildet sind, wobei für die Vermittlung von Verbindungen und Sprachverbindungen zumindest in einem der Teilbereiche ein Gatekeeper vorgesehen ist - Anspruch 6. Nach einer weiteren vorteilhaften Variante sind die Teilbereiche durch Teil-Internets gebildet sind, wobei durch einen Teil der Internet-Adresse ein Teil-Internet bestimmt ist - Anspruch 7. Hierbei kann das erfindungsgemäße Verfahren besonders vorteilhaft in zumindest einem der Teil-Internets realisiert werden, das auf einem paketorientierten Netz nach dem Standard H.323 basieren kann.

Die vorgegebenen übertragungstechnischen Ressourcen sind vorteilhaft durch eine Bandbreiteninformation oder durch eine Anzahl von Verbindungen mit vorgegebenen Bandbreiteninformationen bestimmt - Anspruch 9. Unter Bandbreiteninformationen sind insbesondere durchschnittliche oder Spitzenübertragungsraten bzw. Übertragungsgeschwindigkeiten definiert.

Bei mehreren Verbindungsstrecken zwischen den Teilbereichen sind die übertragungstechnischen Ressourcen je Verbindungsstrecke vorgegeben und bilden zusammen die vorgegebenen übertragungstechnischen Ressourcen - Anspruch 10. Hierbei kann jede dieser Verbindungsstrecken bzw. der übertragungstechnischen Ressourcen nach dem erfindungsgemäßen Verfahren kontrolliert werden.

Gemäß einer weiteren Variante des erfindungsgemäßen Verfahrens können den Teilbereichinformationen unterschiedliche Vermittlungsprioritäten zugeordnet werden - Anspruch 11. Diese Variante wird vorteilhaft eingesetzt, wenn Verbindungen einzelner Dienste gegenüber Verbindungen anderer Dienste bevorzugt zu behandeln sind.

Weitere vorteilhafte Ausgestaltungen sind den weiteren Patentansprüchen zu entnehmen.

Im Folgenden wird das erfindungsgemäße Verfahren anhand einer Zeichnung näher erläutert.

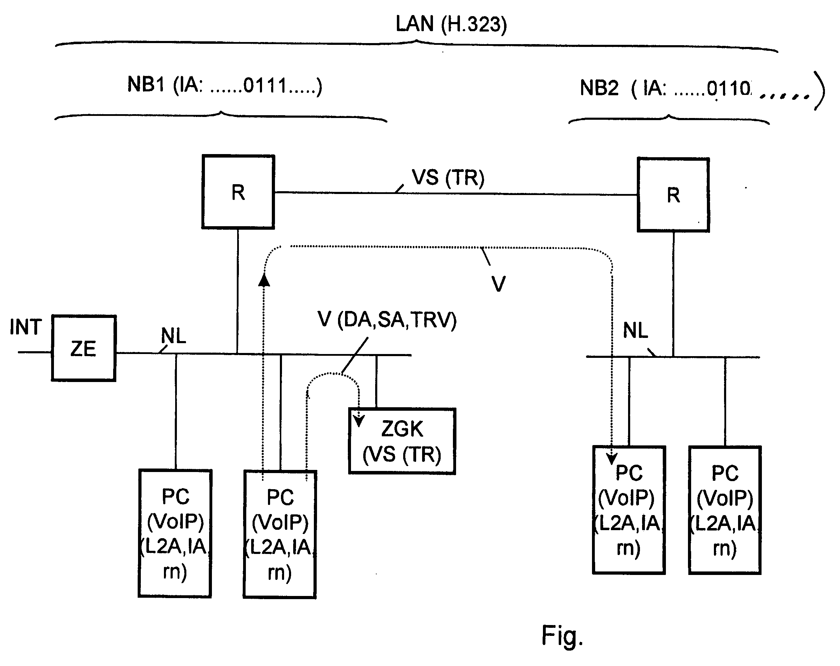

Die Figur zeigt ein paketorientiertes Netz, insbesondere ein paketorientiertes lokales Netz LAN, das durch zwei Teilbereiche NB1,2 gebildet ist. Die beiden Teilbereiche NB1,2 sind über eine Verbindungsstrecke VS verbunden, wobei die Verbindungsstrecke VS in den jeweiligen Teilbereichen NB1,2 an einen Rauter R angeschlossen ist. Der Router R stellt das Bindeglied zwischen dem Übertragungsnetz NL des jeweiligen Teilbereichs NB1,2 des lokalen Netzes LAN dar. In einem Router R werden die Ursprungs- und Zieladressen SA,DA überprüft und bei einer Zieladresse die nicht dem jeweiligen Teilbereich NB1,2 zugeordnet sind, wird das Paket an den anderen Teilbereich NB1,2 vermittelt. Beim Ausführungsbeispiel sei angenommen, dass es sich um ein busförmig ausgestaltetes lokales Netz LAN handelt, wobei die busförmig ausgestalteten Übertragungsstrecken der Teilbereiche NB1,2 über die Router R und die Verbindungsstrecke VS verbunden sind.

An die Übertragungsstrecken NL der Teilbereiche NB1,2 sind des weiteren als Personalcomputer PC ausgestaltete Endgeräte angeschlossen. Für das Ausführungsbeispiel sei weiterhin angenommen, dass das lokale Netz LAN bzw. die Teilbereiche NB1,2 gemäß dem ITU-T-Standard H.323 ausgestaltet sind und für die Verbindungssteuerung und Überwachung in dem ersten Teilbereich NB1 ein zentraler Gatekeeper ZGK angeordnet ist, der diese Funktionen für beide Teilbereiche NB1,2 wahrnimmt.

Bei dem ersten Teilbereich NB1 handelt es sich beispielsweise um das zentrale Kommunikationsnetz einer Firmenzentrale und beim zweiten Teilbereich NB2 um eine Zweigstelle dieser Firma. Für das Ausführungsbeispiel sei weiterhin angenommen, dass beide Teilbereiche NB1,2 des lokalen Netzen LAN über eine im ersten Teilbereich NB1 angeschlossene Zugangseinrichtung ZE mit dem Internet INT verbunden sind. Dies bedeutet, dass neben den Internet-Verbindungen auch Voice over Internet-Verbindungen unter den Personalcomputern PC oder zum Internet INT initialisiert und geführt werden. Ist das lokale Netz LAN Teil des Internet INT, so entfällt die Zugangseinrichtung ZE.

Jedem der Endgeräte bzw. Personalcomputer PC, sowie dem zentralen Gatekeeper ZGK ist sowohl eine physikalische Schicht-2-Adresse L2A und eine Internetadresse IA zugeordnet. Für Übermittlung von Sprachinformationen innerhalb des lokalen Netzes LAN, als auch an das oder vom Internet INT ist in den Endgeräten bzw. Personal Computern PC jeweils eine Voice Over Internet-Funktion VoIP realisiert. Als Adressen für die Initialisierung bzw. den Aufbau von Verbindungen V können hierbei übliche Telefonrufnummern rn verwendet werden.

Erfindungsgemäß wird nun jedem der Teilbereiche NB1,2 eine Teilbereichsinformation zugeordnet. Eine derartige Teilbereichsinformation kann durch einen Teil der Internetadresse IA oder einen Teil der Schicht-2-Adresse L2A oder auch einen Teil der Telefonrufnummern rn repräsentiert sein. So kann beispielsweise der erste oder ein zwischen zwei Punkten der Internetadresse IA angeordneter Teilbereich der Internetadresse IA für die Bestimmung einer Teilbereichinformation bzw. Benutzergruppeninformation herangezogen werden. Im Ausführungsbeispiel ist im mittleren Bereich der Internetadresse IA dem ersten Teilbereich NB1 die Benutzergruppeninformation 0111 und dem zweiten Teilbereich NB2 die Benutzergruppeninformation 0110 zugeordnet. Alternativ kann diese Zuordnung mit den Schicht-2-Adressen L2A oder Teilen der Schicht-2-Adressen oder den Telefonrufnummern rn durchgeführt werden, wobei bei den Telefonrufnummern rn auch ein Präfix, d.h. eine vorangestellte zusätzliche Rufmnummer bzw. Adressinformation möglich ist.

Im Rahmen eines von einem Personalcomputer PC initialisierten Verbindung V wird diese Verbindung V beim zentralen Gatekeeper ZGK signalisiert bzw. angezeigt. Hierbei ist eine Ziel- und eine Ursprungsadresse DA, SA in dem Header des die Initialisierung anzeigenden Pakets eingetragen. Da der zentrale Gatekeeper ZGK sowohl für den ersten und den zweiten Teilbereich NB1,2 zuständig ist, werden sowohl vom ersten und zweiten Teilbereich NB1,2 initialisierte Verbindungen V an den zentralen Gatekeeper ZGK signalisiert. In dem zentralen Gatekeeper ZGK ist gespeichert, dass zwischen dem ersten und zweiten Teilbereich NB1,2 eine Verbindungsstrecke VS mit einer vorgegebenen übertragungstechnischen Ressource TR vorhanden ist. Beispielsweise können die übertragungstechnischen Ressourcen durch eine Übertragungsstrecke mit einer Übertragungsgeschwindigkeit von 128 KBit/sec realisiert sein. Im Rahmen der Signalisierung einer Verbindung V beim zentralen Gatekeeper ZGK wird in diesem überprüft, ob der durch die Zieladresse DA bestimmte Personalcomputer PC oder die Zugangseinrichtung ZE im ersten oder im zweiten Teilbereich NB1,2 an das lokale Netz LAN angeschlossen ist. Ist der Personalcomputer PC bzw. die Zugangseinrichtung ZE, mit dem eine Kommunikation durchgeführt werden soll, im jeweils anderen Teilbereich NB1,2 angeordnet, das heisst, die Verbindung V ist über die beiden Router R und die Verbindungsstrecke VS geführt, wird weiterhin überprüft, wieviele der übertragungstechnischen Ressourcen TR in der Übertragungsstrecke VS verfügbar sind. Auf Grund der mit der Signalisierung der Verbindung V angeforderten übertragungstechnischen Ressourcen TRV kann im zentralen Gatekeepter CGK überprüft werden, ob die verfügbaren übertragungstechnischen Ressourcen TR noch für diese signalisierte Verbindung V ausreichen. Sind die übertragungstechnischen Ressourcen TR verfügbar, wird dem die Verbindung signalisierenden Personalcomputer PC bzw. der Zugangseinrichtung ZE eine entsprechende Meldung mitgeteilt. Sind die übertragungstechnischen Ressourcen TR nicht verfügbar, so wird eine die Nichtverfügbarkeit Mitteilung an den die Verbindung signalisierenden Personalcomputer PC bzw. die Zugangseinrichtung ZE übermittelt, wodurch die Kommunikation mit dem durch die Zielinformation DA bestimmten Personalcomputer PC beendet wird.

Nach einer Initialisierung und Zulassung werden die angeforderten übertragungstechnischen Ressourcen TRV einer Verbindung V zu den aktuell verfügbar übertragungstechnischen Ressourcen TR addiert und stellen für weitere Verbindungen V die verfügbaren übertragungstechnischen Ressourcen TR dar. Wird eine Verbindung V beendet so werden deren angeforderten übertragungstechnischen Ressourcen TRV wieder freigegeben, d.h. von der aktuell verfügbaren übertragungstechnischen Ressourcen TR subtrahiert.

Um bestimmte Dienste, beispielsweise den Voice over Internet-Dienst VoIP zu bevorzugen, kann einer Gruppe von Personalcomputern PC innerhalb eines Teilbereichs NB des lokalen Netzes LAN eine Priorität zugeordnet werden. Diese Zuordnung von Prioritäten kann dadurch erreicht werden, dass die Teilbereiche NB1,2 in weitere Teilbereiche unterteilt werden, und diese unterteilten Teilbereiche bevorzugt, das heisst, priorisiert bei der Verbindungssteuerung im zentralen Gatekeeper ZGK und in den Routern R behandelt werden.

Sind mehrere Verbindungsstrecken VS zwischen den Teilbereichen NB vorgesehen, so können für jede der Verbindungsstrekken VS die vorgegebenen bzw. maximal verfügbaren übertragungstechnischen Ressourcen TR im zentralen Gatekeeper ZGK gespeichert werden. Hierbei kann beispielsweise bei einer weiteren Untergruppe der Teilbereiche NB1,2 jeder Untergruppe eine Verbindungsstrecke VS oder Teile der übertragungstechnischen Ressourcen TR der Verbindungsstrecken VS zugeordnet werden. Alternativ können die übertragungstechnischen Ressourcen TR aller Verbindungsstrecken VS als einzige übertragungstechnische Ressource für Verbindungen von einem Teilbereich NB1 zum anderen Teilbereich NB2 angesehen werden.

Das erfindungsgemäße Verfahren ist nicht auf dieses Ausführungsbeispiel beschränkt, sondern kann in allen paketorientierten Netzen eingesetzt werden, das eine Mehrzahl von geographisch unterschiedlich angeordneten Teilbereichen aufweist, wobei die Teilbereiche durch unterschiedliche Verbindungsstrecken miteinander verbunden sein können - beispielsweise optische Verbindungsstrecken oder Funkstrecken oder Infrarotstrecken. Des weiteren kann das erfindungsgemässe Verfahren in durch Teilbereichs-Steuerungen in jedem der Teilbereiche oder auch in einer zentralen Steuerung für das vollständige paketorientierte Netz realisiert werden. Hierbei sind lediglich Anpassung an die in den Teilbereichen bzw. im paketorientierten Netz verwendeten Übermittlungprotokolle bzw. Initialisierungsprozeduren erforderlich.

## Patentansprüche

1. Verfahren zur Sicherung der Dienstgüte von Verbindungen (V) zwischen zumindest zwei Teilbereichen (NB1,2) eines paketorientierten Netzes (LAN), wobei die Verbindungen (V) über Übertragungsstrecken (NL) der Teilbereiche (NB1,2) sowie über eine Verbindungsstrecke (VS) zwischen den Teilbereichen (NB1, 2) verlaufen, und wobei die Verbindungsstrecke (VS) einen vorgegebenen übertragungstechnischen Ressourcenumfang (TR) aufweist, bei dem
- jedem Teilbereich (NB1,2) eine Teilbereichsinformation (IA,rn) zugeordnet ist,
- bei einer Initialisierung einer der Verbindungen (V) die dem Ursprungs- und Ziel-Teilbereich (NB1,2) zugeordnete Teilbereichinformation (IA,rn) sowie eine angeforderte Ressource (TRV) signalisiert werden,
- hierbei geprüft wird, ob der Ziel-Teilbereich der Verbindung (V) von deren Ursprungs-Teilbereich verschieden ist,
- falls dies zutrifft, anhand der signalisierten Ressourcen (TRV) geprüft wird, ob die verfügbaren übertragungstechnischen Ressourcen (TR) der Verbindungsstrecke (VS) noch für die Verbindung (V) ausreichen, und
- falls die verfügbaren übertragungstechnischen Ressourcen (TR) der Verbindungsstrecke (VS) noch für die Verbindung (V) ausreichen, die zu initialisierende Verbindung (V) zugelassen wird, und andernfalls nicht zugelassen wird.

2. Verfahren nach Anspruch 1, **dadurch gekennzeichnet,**
**dass** die Sicherung der Dienstgüte der Verbindungen (V) in zumindest einem der Teilbereiche (NB1,2) für zumindest einen weiteren Teilbereich (NB1,2) durchgeführt wird.

3. Verfahren nach Anspruch 1 oder 2, **dadurch gekennzeichnet,**
**dass** die Teilbereichinformation (IA,rn) durch eine Benutzergruppeninformation repräsentiert ist, wobei diese durch
- eine zusätzliche Aressinformation bzw. Wählinformation oder
- eine durch eine Zuordnung von Gruppen von Adressinformationen des Netzes zu den Teilbereichen (NB1,2) oder
- eine durch eine Zuordnung von Gruppen von Schicht-2-Information (L2A) zu den Teilbereichen (NB1,2) oder
- durch eine Zuordnung von Teilen einer Adressinformation oder Wählinformation zu den Teilbereichen (NB1,2) oder
- eine organisatorische Informationen der Teilbereiche (NB1,2)
angezeigt wird.

4. Verfahren nach einem der Ansprüche 1 bis 3, **dadurch gekennzeichnet,**
**dass** die Teilbereiche (NB1,2) des Netzes in weitere Unterbereiche unterteilt ist, wobei den weiteren Unterbereichen jeweils ein Teil der übertragungstechnischen Ressourcen (TR) der zumindest einen Verbindungsstrecke (VS) zugeordnet ist.

5. Verfahren nach Anspruch 4, **dadurch gekennzeichnet, dass** die Unterbereiche durch Benutzergruppen
- mit unterschiedlichen Diensten oder
- Dienstklassen
repräsentiert sind.

6. Verfahren nach einem der Ansprüche 1 bis 5, **dadurch gekennzeichnet,**
**dass** bei einem Netz (LAN) gemäß dem Standard ITU-T H.323 mit durch lokale Zonen gebildeten Teilbereichen (NB1,2) Verbindungen und Sprachverbindungen durch einen Gatekeeper (ZGK) eines Teilbereichs (NB1,2) vermittelt werden.

7. Verfahren nach einem der Ansprüche 1 bis 5, **dadurch gekennzeichnet,**
**dass** die Teilbereiche (NB1,2) durch Teil-Internets gebildet sind, wobei durch einen Teil der Internet-Adresse ein Teil-Internet bestimmt ist.

8. Verfahren nach Anspruch 6 oder 7, **dadurch gekennzeichnet,**
**dass** bei Sprachverbindungen über einen Teilbereich (NB1,2) oder Voice over Internet-Verbindungen (VoIP) Gruppen von Telefon-Rufnummern (rn) oder Teile der Rufnummern (rn) den Teilbereichen (NB1,2) zugeordnet werden.

9. Verfahren nach einem der vorhergehenden Ansprüche, **dadurch gekennzeichnet,**
**dass** die vorgegebenen übertragungstechnischen Ressourcen (TR) durch eine Bandbreiteninformation oder durch eine Anzahl von Verbindungen (V) mit vorgegebener Bandbreiteninformation bestimmt wird.

10. Verfahren nach einem der vorhergehenden Ansprüche, **dadurch gekennzeichnet,**
**dass** bei mehreren Verbindungsstrecken (VS) zwischen den Teilbereichen (NB1,2) die übertragungstechnischen Ressourcen (TR) je Verbindungsstrecke (VS) vorgegeben sind und zusammen die vorgegebenen übertragungstechnischen Ressourcen (TR) bilden.

11. Verfahren nach einem der vorhergehenden Ansprüche, **dadurch gekennzeichnet,**
**daß** den Teilbereichinformationen (IA,rn) unterschiedliche Übermittlungsprioritäten zugeordnet werden.

## Claims

1. Method for assuring the quality of service of connections (V) between at least two subregions (NB1, 2) of a packet-oriented network (LAN), the connections (V) running over transmission paths (NL) of the subregions (NB1, 2) and over a connection path (VS) between the subregions (NB1, 2), and the connection path (VS) having a prescribed scope of transmission system resources (TR), in which
- each subregion (NB1, 2) has an associated item of subregion information (IA, rn),
- when one of the connections (V) is initialized, the item of subregion information (IA, rn) associated with the origin subregion and the destination subregion (NB1, 2) and also a requested resource (TRV) are signalled,
- this involves checking whether the destination subregion of the connection (V) is different from the origin subregion thereof,
- if this is the case, the signalled resources (TRV) are used to check whether the available transmission system resources (TR) of the connection path (VS) are still sufficient for the connection (V), and
- if the available transmission system resources (TR) of the connection path (VS) are still sufficient for the connection (V), the connection (V) to be initialized is authorized, and otherwise is not authorized.

2. Method according to Claim 1, **characterized**
**in that** the quality of service of the connections (V) in at least one of the subregions (NB1, 2) is assured for at least one other subregion (NB1, 2).

3. Method according to Claim 1 or 2, **characterized**
**in that** the item of subregion information (IA, rn) is represented by an item of user group information, the latter being indicated by
- an additional item of address information or dialling information, or
- an association between groups of address information items for the network and the subregions (NB1, 2), or
- an association between groups of Layer 2 information items (L2A) and the subregions (NB1, 2), or
- an association between parts of an item of address information or dialling information and the subregions (NB1, 2), or
- an item of organizational information for the subregions (NB1, 2).

4. Method according to one of Claims 1 to 3, **characterized in that** the subregions (NB1, 2) of the network are subdivided into further subranges, the further subranges each having been allocated some of the transmission system resources (TR) of the at least one connection path (VS).

5. Method according to Claim 4, **characterized in that** the subranges are represented by user groups
- having different services or
- service classes.

6. Method according to one of Claims 1 to 5, **characterized in that**, in the case of a network (LAN) based on ITU-T Standard H.323 having subregions (NB1, 2) formed by local zones, connections and voice links are switched by a gatekeeper (ZGK) of a subregion (NB1, 2).

7. Method according to one of Claims 1 to 5, **characterized in that** the subregions (NB1, 2) are formed by Internet sections, with part of the Internet address determining an Internet section.

8. Method according to Claim 6 or 7, **characterized**
**in that**, in the case of voice links via a subregion (NB1, 2) or Voice over Internet links (VoIP), groups of telephone numbers (rn) or parts of the telephone numbers (rn) are allocated to the subregions (NB1, 2).

9. Method according to one of the preceding claims,
**characterized**
**in that** the prescribed transmission system resources (TR) are determined by an item of bandwidth information or by a number of connections (V) having a prescribed item of bandwidth information.

10. Method according to one of the preceding claims, **characterized**
**in that**, when there are a plurality of connection paths (VS) between the subregions (NB1, 2), the transmission system resources (TR) are prescribed for each connection path (VS) and together form the prescribed transmission system resources (TR).

11. Method according to one of the preceding claims, **characterized**
**in that** the items of subregion information (IA, rn) are allocated different transmission priorities.

## Revendications

1. Procédé pour garantir la qualité de service de liaisons (V) entre au moins deux zones partielles (NB1, 2) d'un réseau (LAN) orienté paquet, les liaisons (V) s'étendant sur des tronçons de transmission (NL) des zones partielles (NB1, 2) et sur un tronçon de liaison (VS) entre les zones partielles (NB1, 2), et le tronçon de liaison (VS) présentant une étendue de ressource (TR) technique de transmission prédéfinie, dans lequel
- une information de zone partielle (IA, rn) est attribuée à chaque zone partielle (NB1, 2),
- lors d'une initialisation de l'une des liaisons (V), l'information de zone partielle (IA, rn) attribuée à la zone partielle d'origine et à la zone partielle cible (NB1, 2) et une ressource demandée (TRV) sont signalées,
- on vérifie alors si la zone partielle cible de la liaison (V) est différente de sa zone partielle d'origine,
- si ceci est vrai, on teste à l'aide des ressources signalées (TRV) si les ressources techniques de transmission (TR) disponibles du tronçon de liaison (VS) sont encore suffisantes pour la liaison (V), et
- si les ressources techniques de transmission (TR) disponibles du tronçon de liaison (VS) suffisent encore pour la liaison (V), la liaison (V) à initialiser est autorisée, et autrement elle n'est pas autorisée.

2. Procédé selon la revendication 1, **caractérisé en ce que** la garantie de la qualité de service des liaisons (V) est réalisée dans au moins l'une des zones partielles (NB1, 2) pour au moins une autre zone partielle (NB1, 2).

3. Procédé selon la revendication 1 ou 2, **caractérisé en ce que** l'information de zone partielle (IA, rn) est représentée par une information de groupe d'utilisateurs, celle-ci étant indiquée par
- une information d'adresse ou une informations de sélection supplémentaire ou
- par une attribution de groupes d'informations d'adresse du réseau aux zones partielles (NB1, 2) ou
- par une attribution de groupes d'information de couche 2 (A) aux zones partielles (NB1, 2) ou
- par une attribution de parties d'une information d'adresse ou d'une information de sélection aux zones partielles (NB1, 2) ou
- une information d'organisation des zones partielles (NB1, 2).

4. Procédé selon l'une quelconque des revendications 1 à 3, **caractérisé en ce que**
les zones partielles (NB1, 2) du réseau sont subdivisées en d'autres sous-zones, une partie des ressources techniques de transmission (TR) du au moins un tronçon de liaison (VS) étant attribuée aux autres sous-zones.

5. Procédé selon la revendication 4, **caractérisé en ce que** les sous-zones sont représentées par des groupes d'utilisateurs
- avec différents services ou
- différentes classes de service.

6. Procédé selon l'une quelconque des revendications 1 à 5, **caractérisé en ce que**
sur un réseau (LAN) selon le standard ITU-T H.323 avec des zones partielles (NB1, 2) formées par des zones locales, des liaisons et des liaisons vocales sont transmises par un Gatekeeper (ZGK) d'une zone partielle (NB1, 2).

7. Procédé selon l'une quelconque des revendications 1 à 5, **caractérisé en ce que**
les zones partielles (NB1, 2) sont formées par des Internet partiels, un Internet partiel étant défini par une partie de l'adresse Internet.

8. Procédé selon la revendication 6 ou la revendication 7, **caractérisé en ce que**,
lors de liaisons vocales au moyen d'une zone partielle (NB1, 2) ou de liaisons Voice over Internet (VoIP), des groupes de numéros d'appel de téléphone (rn) ou des parties des numéros d'appel (rn) sont attribuées aux zones partielles (NB1, 2).

9. Procédé selon l'une quelconque des revendications précédentes, **caractérisé en ce que**
les ressources techniques de transmission (TR) prédéfinies sont définies par une information de largeur de bande ou par un nombre de liaisons (V) avec une information de largeur de bande prédéfinie.

10. Procédé selon l'une quelconque des revendications précédentes, **caractérisé en ce que**
en cas de plusieurs tronçons de liaison (VS) entre les zones partielles (NB1, 2), les ressources techniques de transmission (TR) sont prédéfinies par tronçon de liaison (VS) et forment ensemble les ressources techniques de transmission (TR) prédéfinies.

11. Procédé selon l'une quelconque des revendications précédentes, **caractérisé en ce que** différentes priorités de transmission sont attribuées aux informations de zone partielle (IA, rn).
